# EUROPEAN PATENT SPECIFICATION

(11) **EP 4 186 947 B1**
(45) Date of publication and mention of the grant of the patent: **19.06.2024**
(21) Application number: 21210665.2
(22) Date of filing: 26.11.2021
(51) Int. Cl.: C08L 83/08, C09D 183/08, C09J 183/08

(54) **POLYORGANOSILOXANE HAVING HETEROATOM-CONTAINING SILYL GROUP**
POLYORGANOSILOXAN MIT HETEROATOMHALTIGER SILYLGRUPPE
POLYORGANOSILOXANE AYANT UN GROUPE SILYLE CONTENANT DES HÉTÉROATOMES

(43) Date of publication of application: 31.05.2023
(73) Proprietor: Henkel AG & Co. KGaA, 40589 Düsseldorf (DE)
(72) Inventor: GUTACKER, Andrea, 40764 Langenfeld (DE); DUNEKAKE, Ralf, 40589 Düsseldorf (DE); ZHAO, Ligang, 40593 Düsseldorf (DE); LANAU, Sebastien, 40237 Düsseldorf (DE); SCHAFHAUSEN, Niklas, 18057 Rostock (DE); MEJIA, Esteban, 18059 Rostock (DE)

(56) References cited:
- EP-A1- 0 469 243
- WO-A1-2009/120434
- FR-A1- 2 316 240
- JP-A- 2015 180 616
- US-A- 2 640 818
- US-A- 2 845 435

## Description

The invention relates to polyorganosiloxanes with special silicon-containing group(s), a method for preparing said polyorganosiloxanes, and curable compositions comprising at least one said polyorganosiloxane, at least one adhesion promoter, and at least one curing catalyst. The invention also relates to adhesive, sealant, or coating materials comprising the curable composition and the use of the curable composition.

Curable polymer systems which possess reactive silyl groups, for example alkoxysilyl groups, have long been known. In the presence of atmospheric moisture these alkoxysilane-containing polymers are able to undergo condensation reactions with elimination of the alkoxy groups as alcohols. Depending on the amount of alkoxysilane groups and their structure, mainly long-chain polymers (thermoplastics), relatively wide-meshed three-dimensional networks (elastomers) or highly crosslinked systems (thermosets) form.

Numerous silane capping agents that act as endcapping or functionalizing moieties for the respective polymer backbone are known in the art. Besides their functionality used for coupling to the polymer backbone, these can be differentiated into acidic, basic, and neutral silane capping agents based on the type of leaving groups released during hydrolysis.

The crosslinking density of cured silyl-terminated polymers depends on both the chain length of the polymer but also the number of hydrolyzable silyl groups of the terminating group. For example, polymers having a trialkoxysilyl groups at both terminals show high curability expressed by the short time until skin development is reached. The resulting cured products are known to be harder and more brittle compared to cured dialkoxy-terminated polymers. This is due to the fact the crosslinking density becomes too high during curing. This can be overcome by tailoring the chain length of the cured polymer. The longer the polymer chain, the lower is the crosslinking density. In roomtemperature vulcanizing (RTV) formulations crosslinking density can be furthermore influenced by the amount of crosslinking agent used: the higher the concentration, the higher the crosslinking density.

Another important influencing parameter is the organic moiety attached to the silane. For instance, EP 421129 A1 and EP 1414909 A1 demonstrated that polymers terminated with silyl groups having alkoxy groups and an electronegative, free electron-pair-containing heteroatom bridged to a silicon through a methylene group lead to faster curing, even at room temperature. These types of reagents are known in the art as alpha-silanes since the heteroatom is bound to a carbon atom in the position alpha to the silicon atom.

The use of alpha-silanes as endcappers in RTV formulations is advantageous since the amount of the vulcanization catalyst can be decreased thanks to the high reactivity of alpha-silanes. In some cases, the addition of a catalyst is not needed. Despite this advantage, the high reactivity of common methylene-bridged alpha-silanes represents in many applications an important drawback. For example, due to the high reactivity in some cases the use of methylene-bridged alpha-silanes lead to great difficulties, such as short time of processability, uncontrolled reactivity, lower shelf-life, limited applicability, etc.

Other state-of-the-art alkoxysilanes are much less reactive than methylene-bridged alpha-silanes, being their hydrolysable moieties in commercial formulations exclusively limited to methoxy groups. This is an important drawback as it precludes the development of novel formulation system, e.g., having ethoxy leaving groups, resulting in less toxic formulations compared to the classic methoxy-formulations where methanol is released.

Thus, there is a need for polysiloxane having a reactive silyl group with an intermediate reactivity, being less reactive than the methylene-bridged alpha silanes, but still much more reactive than classic alkoxysilanes.

Document US2640818 discloses thienyl substituted polysiloxanes from which the present polymers differ in that the silicon atom bearing the thienyl group is linked to the siloxane backbone via a ethylene group resulting from a hydrosilylation reaction. In this document said silicon atom originates from a trichlorosilane which is then polymerised by polycondensation.

It is therefore an object of the present invention to provide alternative polyorganosiloxanes which overcome the disadvantages of the prior art.

The present invention achieves said object by providing polyorganosiloxane containing a special silyl group having at least one hydrolysable group and at least one heteroatom bridged to a silicon atom via a sp²-hybridized quaternary carbon atom. The curable compositions based on these polyorganosiloxanes with specific silane groups exhibit improved curing and kinetical properties compared to formulations based on state-of-the art, such as vinyltrialkoxysilanes.

In accordance with the first aspect of the invention there is provided a polyorganosiloxane containing at least one silyl group of the general formula (1)

-(CH₂)₂-Si(R¹)ₙ(R)ₘ (1),

wherein
each R¹ is independently selected from a hydrolysable group, preferably selected from the group consisting of alkoxy, carboxy, oxime, amino, amido, lactato, alkenoxy, and acetoxy groups, more preferably alkoxy groups,
each R is independently of a group of the general formula (2) having at least one heteroatom X bridged to a silicon atom of the general formula (1) via a sp²-hybridized quaternary carbon atom: 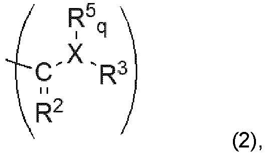 wherein
   X is a divalent or polyvalent heteroatom;
   each R⁵ is independently selected from oxygen, hydrogen, or a linear or branched, substituted or unsubstituted hydrocarbon group having 1 to 20 carbon atoms which may contain at least one heteroatom;
   R² and R³ are, independently from one another, selected from hydrogen or a linear or branched, substituted or unsubstituted hydrocarbon group having 1 to 20 carbon atoms which may contain at least one heteroatom, or R² and R³ may form a cyclic structure; and
   q is an integer selected from 0 to 3; and
n is 1 or 2 and m is 1 or 2, wherein the sum of n and m is 3.

In another aspect, the invention relates to a method for preparing a polyorganosiloxane containing at least one silyl group of the general formula (1) as described above, comprising the step of reacting at least one polyorganosiloxane having at least one -SiH group with at least one silane compound of the general formula (3) having at least one heteroatom X bridged to a silicon atom via a sp²-hybridized quaternary carbon atom in the presence of a hydrosilylation catalyst, 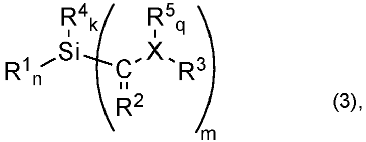 wherein
R¹ to R³, R⁵, X, n, m, and q are as defined for the general formulas (1) and (2) above;
R⁴ is vinyl group; and
k is 1.

In another aspect, the invention relates to a curable composition that comprises the polyorganosiloxane of the invention.

The invention also relates to an adhesive, sealant, or coating material comprising the curable composition according to the invention.

The invention further relates to the use of a curable composition of the invention as an adhesive, sealant, or coating material.

As used herein, the singular forms "a", "an" and "the" include plural referents unless the context clearly dictates otherwise.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in the composition/mixture, i.e., that the composition contains no other compounds of this type beyond the given amount of the relevant compounds.

The terms "comprising" and "comprises" as used herein are synonymous with "including", "includes", "containing" or "contains", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "preferred" and "preferably" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

As used herein, room temperature is 23°C plus or minus 2°C.

A "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In the context of the present invention, "curable" predominantly relates to the property of the silyl groups of the general formula (1) to condensate.

The molecular weights given in the present text refer to number average molecular weights (Mn), unless otherwise stipulated. All molecular weight data refer to values obtained by gel permeation chromatography (GPC) carried out at 40 °C. Toluene was used as an eluent. The sample was passed through three PSS SDV gel columns with molecular weight ranges of 102, 103 and 104 g·mol⁻¹ with a flow rate of 0.9 ml·min⁻¹. The calibration of the device was carried out using polystyrene standards.

As used herein, "polydispersity" refers to a measure of the distribution of molecular mass in a given polymer sample. The polydispersity is calculated by dividing the weight average molecular weight (Mw) by the number average molecular weight (Mn).

As used herein, "C₁ to C₂₀ alkyl" group refers to a monovalent group that contains 1 to 20 carbons atoms, that is a radical of an alkane and includes linear and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 12 carbon atoms (C₁-C₁₂ alkyl) - for example unsubstituted alkyl groups containing from 1 to 4 carbon atoms (C₁-C₄ alkyl) - should be noted.

As used herein, the term "C₂ to C₂₀ alkenyl" group refers to an aliphatic hydrocarbon group which contains 2 to 20 carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be linear, branched, or cyclic and substituted or unsubstituted. If they are substituted, the substituents are as defined above for alkyl.

As used herein, the term "C₅ to C₂₀ aryl" group used alone or as part of a larger moiety - as in "aralkyl group" - refers to optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. Exemplary aryl groups include: phenyl; indenyl; naphthalenyl, tetrahydronaphthyl, tetrahydroindenyl; tetrahydroanthracenyl; pyridinyl; and, anthracenyl. And a preference for phenyl groups may be noted.

As used herein, an "aralkyl" group refers to an alkyl group that is substituted with an aryl group. An example of an aralkyl group is benzyl.

Where mentioned, the expression "contain(s)/containing at least one heteroatom" means that the residue comprises at least one atom that differs from carbon atom and hydrogen. Preferably the term "heteroatom" refers to nitrogen, oxygen, silicon, sulfur, phosphorus, halogens such as Cl, Br, F. Sulfur (S), oxygen (O) and nitrogen (N) may be mentioned as typical heteroatoms in the context of the present invention.

As used herein, the "heterocyclic" compound refers to a saturated or unsaturated, monocyclic, bicyclic, polycyclic or fused compound containing at least one heteroatom, preferably O, S, N, and/or P, in the ring structure.

As used herein, the term "halogen" refers to fluorine, chlorine, bromine or iodine.

Polyorganosiloxanes according to the invention contain at least one silyl group of the general formula (1)

-(CH₂)₂-Si(R¹)ₙ(R)ₘ (1),

wherein
each R¹ is independently selected from a hydrolysable group, preferably selected from the group consisting of alkoxy, carboxy, oxime, amino, amido, lactato, alkenoxy, and acetoxy groups, more preferably alkoxy groups;
each R is independently of a group of the general formula (2) having at least one heteroatom X bridged to a silicon atom of the general formula (1) via a sp²-hybridized quaternary carbon atom: 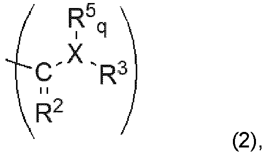 wherein
   X is a divalent or polyvalent heteroatom;
   each R⁵ is independently selected from oxygen, hydrogen, or a linear or branched, substituted or unsubstituted hydrocarbon group having 1 to 20 carbon atoms which may contain at least one heteroatom;
   R² and R³ are, independently from one another, selected from hydrogen or a linear or branched, substituted or unsubstituted hydrocarbon group having 1 to 20 carbon atoms which may contain at least one heteroatom, or R² and R³ may form a cyclic structure; and
   q is an integer selected from 0 to 3; and
n is 1 or 2 and m is 1 or 2, wherein the sum of n and m is 3.

In preferred embodiments, each R in the general formula (1) independently has the structure of the general formula (2-A): 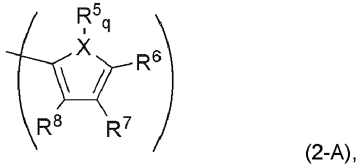 wherein
R⁵, X, and q are as defined for the general formula (2) above; and
R⁶, R⁷and R⁸ are, independently from one another, selected from hydrogen, a hydroxy group, or a linear or branched, substituted or unsubstituted hydrocarbon group having 1 to 20 carbon atoms which may contain at least one heteroatom.

The general formulas (2) and (2-A) contain at least one heteroatom X bridged to a silicon atom of the general formula (1) via a sp²-hybridized quaternary carbon atom.

In preferred embodiments, each R¹ in the general formula (1) is independently selected from the group consisting of alkoxy, carboxy, oxime, amino, amido, lactato, alkenoxy, and acetoxy groups. More preferably, each R¹ is independently selected from C₁ to C₈ alkoxy groups, in particular is a methoxy or ethoxy group. In addition to methoxy and ethoxy groups, it is of course also possible to use larger residues as hydrolysable groups, which by nature exhibit lower reactivity. This is of particular interest if delayed curing is also to be achieved by means of the configuration of the alkoxy groups.

In preferred embodiments, X in the general formula (2) or (2-A) is selected from O, S, N or P, more preferably O or S, most preferably is S.

In preferred embodiments, each R⁵ in the general formula (2) or (2-A) is independently selected from oxygen, hydrogen, or linear or branched, substituted or unsubstituted C₁ to C₂₀ alkyl, C₄ to C₈ cycloalkyl, or C₆ to C₂₀ aryl groups which may contain at least one heteroatom, preferably selected from O, N, S, P, Si, Cl, Br, I or F.

In preferred embodiments, R² and R³ in the general formula (2) are independently selected from hydrogen or a linear or branched, substituted or unsubstituted C₁ to C₂₀ alkyl, C₂ to C₂₀ alkenyl, C₆ to C₂₀ aryl, C₇ to C₂₀ alkaryl or C₇ to C₂₀ aralkyl groups which may contain at least one heteroatom, preferably selected from O, N, S, P, Si, Cl, Br, I or F. In other preferred embodiments, R² and R³ may form a cyclic structure, preferably a substituted or unsubstituted 5- to 10-membered cyclic hydrocarbon structure containing the heteroatom X as part of the ring, wherein X is preferably selected from O, S, N or P, more preferably O or S, most preferably is S.

In the general formula (1), n is 1 or 2 and m is 1 or 2, wherein the sum of n and m is 3. In preferred embodiments, n is 2 and m is 1, i.e., the group of the general formula (1) has two hydrolysable groups R1.

In the general formula (2-A), R⁶, R⁷and R⁸ are, independently from one another, selected from hydrogen, a hydroxy group, or a linear or branched, substituted or unsubstituted hydrocarbon group having 1 to 20 carbon atoms, preferably selected from C₁ to C₂₀ alkyl, C₄ to C₈ cycloalkyl or C₆ to C₂₀ aryl groups which may contain at least one heteroatom, preferably selected from O, N, S or Si. In important embodiments, R⁶, R⁷and R⁸ are hydrogen.

The silyl group of the general formula (1) can be a lateral group within the polymer chain or a terminal group of the polyorganosillxoane. In preferred embodiments, the silyl group of the general formula (1) is a terminal group of the polyorganosiloxane.

In preferred embodiments, the polyorganosiloxanes of the invention contain at least two silyl groups of the general formula (1). In this case, the polyorganosiloxane can have at least one lateral silyl group of the general formula (1) and at least one terminal silyl group of the general formula (1); or, at least two lateral silyl groups of the general formula (1); or, at least two terminal silyl groups of the general formula (1).

In particularly preferred embodiments, the polyorganosiloxanes of the invention contain at least two terminal silyl groups of the general formula (1). If the polyorganosiloxane is branched, it preferably has a silyl group of the general formula (1) at each end. Accordingly, while the invention covers polymers that have the silyl group of formula (1) only on one end, it is preferred that all polymer chain ends are endcapped by said groups, i.e. a linear polymer would thus have two terminal silyl groups. If the polymer is branched, it is preferred that each end is endcapped with the silyl group of the general formula (1).

In preferred embodiments, the polyorganosiloxane, which contains at least one terminal silyl group of the general formula (1) bound to a silicon atom, is a polydiorganosiloxane, more preferably a polydialkylsiloxane, polydiarylsiloxane, or polyalkylarylsiloxane, in particular, polydimethylsiloxane, polydiphenylsiloxane, or polymethylphenylsiloxane.

The polyorganosiloxanes containing at least one silyl group of the general formula (1) of the invention are obtainable by a method comprising the step of reacting at least one polyorganosiloxane having at least one -SiH group with at least one silane compound of the general formula (3) having at least one heteroatom X bridged to a silicon atom via a sp²-hybridized quaternary carbon atom in the presence of a hydrosilylation catalyst, 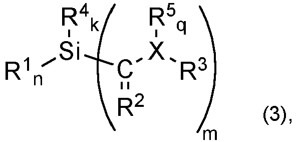 wherein
R¹ to R³, R⁵, X, n, m, and q are as defined for the general formulas (1) and (2) above;
R⁴ is vinyl group; and
k is 1.

In preferred embodiments, said at least one silane compound has the structure of the general formula (3-A): 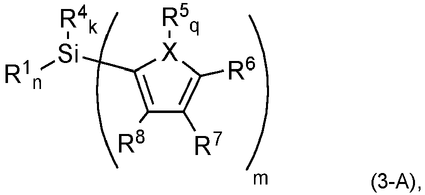 wherein
R¹, R⁴, R⁵ to R⁸, X, n, m, q, and k are as defined for the general formulas (1), (2-A), and (3) above.

Preferably, a polydiorganosiloxane having a -SiH terminal group at both ends, particularly a polydimethylsiloxane having a -SiH terminal group at both ends is used to prepare the polyorganosiloxane according to the invention. Particularly preferred are polydimethylsiloxanes having a -SiH terminal group at both ends, which have a kinematic viscosity at 25°C of 500 to 200,000 cSt, particularly 2,000 to 150,000 cSt, and particularly preferably 50,000 to 90,000 cSt.

In preferred embodiments, the polyorganosiloxane having at least one -SiH group has a weight average molecular weight from 200 to 200,000, more preferably 1000 to 150,000.

The above-described reaction of at least one polyorganosiloxane having at least one -SiH group with at least one silane compound of the general formula (3) or (3-A) is carried out in the presence of a hydrosilylation catalyst.

In preferred embodiments, the hydrosilylation catalyst can be selected from a transition metal complex of Pt, Rh, or Ru. More preferably the catalyst is selected from H₂PtCl₆, Karstedt's catalyst, or any alkylene-stabilized platinum(0).

In preferred embodiments, the hydrosilylation catalyst is employed in an amount of from about 0.01 to about 1% by weight, more preferably from about 0.015 to about 0.5% by weight.

In preferred embodiments, the molar ratio of the -SiH group of the polyorganosiloxane and the vinyl group of the silane compound of the general formula (3) or (3-A) is from 1:1 to 1:4, more preferably from 1:1 to 1:3. In particularly preferred embodiments, the silane compound of the general formula (3) or (3-A) is used in molar excess with respect to the molar ratio of its vinyl group to -SiH group of the polyorganosiloxane.

In preferred embodiments, the reaction of at least one polyorganosiloxane having at least one -SiH group with at least one silane compound of the general formula (3) or (3-A) is carried out at a temperature between 70°C and 100°C, more preferably between 80°C and 100°C, for about 3 to 10 hours, more preferably about 4 to 7 hours.

The silane compound of the general formula (3) as defined herein, for example, can be obtained by a method comprising the steps of:
a) contacting at least one metal with an organic solvent, wherein the metal is selected from the group consisting of Mg, Na, Li, Ca, Ba, Cd, and Zn, or mixtures or alloys thereof,
b) adding at least one silane of the general formula (4) to the organic solvent

   Si(R¹)ₙ₊₁(R⁴)ₖ (4),

   wherein R¹ and R⁴, n, and k are as defined above, and
c) adding at least one halogenated compound of the general formula (5) to the reaction medium obtained in the step b) 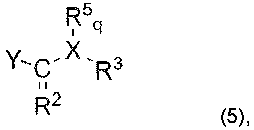
   wherein R², R³, and R⁵, and q are as defined above; and
   Y is a halogen atom.

In preferred embodiments, the halogenated compound having the general formula (5-A) is used in the step c) to obtain the silane of the general formula (3-A) as defined herein 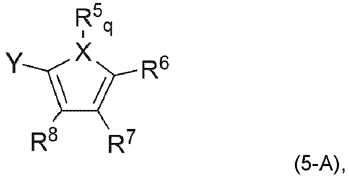
wherein R⁵ to R⁸, X and q are as defined above; and
Y is a halogen atom.

In the general formula (5) or (5-A), Y is preferably selected from Cl, Br, or I, more preferably Br.

The metal in step a) is selected from the group consisting of Mg, Na, Li, Ca, Ba, Cd, and Zn, or mixtures or alloys thereof. In preferred embodiments, the metal is Mg.

Preferably, the addition of the at least one halogenated compound of the general formula (5) or (5-A) (step c)) is conducted after the steps a) and b). This results in the in situ generation of an organometallic species which directly reacts with the organosilane to the desired product.

In preferred embodiments, the at least one halogenated compound of the general formula (5) or (5-A) is added in step c) while maintaining the temperature at a temperature lower than or equal to the boiling point of the organic solvent, more preferably at a temperature lower than the boiling point of the organic solvent. The halogenated compound of the general formula (5) or (5-A) can be added dropwise. A reduction in reaction temperature has been found to influence the yield. The reduced temperature suppresses initial side reactions, boosting the overall yield.

In preferred embodiments, the organic solvent is selected from cyclic ethers, or dialkyl ethers, or aryl ethers, preferably dioxane, tetrahydrofuran, 2-methyl-tetrahydrofuran, diethyl ether or cyclopentyl methyl ether, most preferably is tetrahydrofuran.

In particularly preferred embodiments, the organic solvent is tetrahydrofuran and the halogenated compound of the general formula (5) or (5-A) is added in step c) while maintaining the temperature at a temperature between 40 °C and 66 °C, preferably between 40 °C and 60 °C, more preferably between 40 °C and 50 °C.

In preferred embodiments, the above-described process for preparing the silane compound of the general formula (3) or (3-A) further comprises the step d): removing the organic solvent after the reaction in the step c), preferably by distillation under inert conditions and under reduced pressure and/or at increased temperature, and then adding a second organic solvent which is different from the removed solvent (hereinafter, also referred to as "first organic solvent"). The remaining halogenated compounds can be removed during the removal alongside the first organic solvent. Switching solvents during the procedure ensures substantially full precipitation of the obtained crude product, that contains desired product and starting silane material and only traces of remaining solvent.

In preferred embodiments, the second organic solvent, which is different from the first organic solvent, is selected from C₄₋₂₀ hydrocarbons with a dielectric constant (at 20°C) lower than 3, preferably selected from alkanes or arenes, more preferably selected from n-pentane, n-hexane, n-heptane, cyclohexane, benzene, toluene or xylene, most preferably is an n-hexane.

In preferred embodiments, the molar ratio of the silane of the general formula (4) added in the step b) and the halogenated compound of the general formula (5) or (5-A) added in the step c) is from 1:5 to 5:1, preferably from 1:1 to 2:1.

The curable compositions according to the invention comprise
(A) at least one polyorganosiloxane containing at least one silyl group of the general formula (1) as defined above;
(B) at least one adhesion promoter; and
(C) at least one curing catalyst.

In preferred embodiments, the curable compositions comprise (A) at least one polyorganosiloxane in an amount of about 10 to 95% by weight, more preferably in an amount of about 30 to 85% by weight, based on the total weight of the composition. If a mixture of polyorganosiloxanes is used, the amounts relate to the total amount of polyorganosiloxanes in the composition.

In preferred embodiments, the adhesion promoter comprises at least one compound selected from (i) aminosilanes, optionally oligomerized together with alkyl-, alkenyl- or aryl-alkoxysilanes; or (ii) oligomers obtained from the condensation of aminosilanes, optionally oligomerized together with alkyl-, alkenyl- or aryl-alkoxysilanes, or mixtures thereof.

More preferably, the adhesion promoter includes 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-aminoethyl)-3-aminopropyltriethoxysilane, diethylenetriaminopropyltrimethoxysilane, phenylaminomethyl-trimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N ,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)-propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamine, 4-amino-3,3-dimethylbutyltrimethoxy silane or 4-amino-3,3-dimetylbutyltriethoxy silane or mixtures thereof, particularly preferably of 3-aminopropyltri(m)ethoxysilane, aminomethyltri(m)ethoxysilane, 3-(N,N-dimethylamino)propyltri(m)ethoxysilane, (N,N-dimethylamino)methyltri(m)ethoxysilane, 3-(N,N-diethylamino)propyltri(m)ethoxysilane, (N,N-diethylamino)methyltri(m)ethoxysilane, 4-amino-3,3-dimetylbuthyltri(m)ethoxy silane, bis(3-tri(m)ethoxysilyl)propylamine, or N-(n-butyl)-3-aminopropyltrimethoxysilane, or oligomers obtained from the condensation of at least one of the above-mentioned aminosilanes, or mixtures thereof. The above-mentioned monomeric aminosilanes or oligomers can be oligomerized together with alkyl-, alkenyl- or aryl-alkoxysilanes, preferably methyltri(m)ethoxysilane, ethyltri(m)ethoxysilane, propyltri(m)ethoxysilane, vinyltri(m)ethoxysilane, n-butyltri(m)ethoxysilane, isobutyltri(m)ethoxysilane, phenyltri(m)ethoxysilane, and/or octyltri(m)ethoxysilane.

"(m)ethoxy", as used herein, relates to methoxy and ethoxy. Accordingly, "aminopropyltri(m)ethoxysilane" relates to both aminopropyltrimethoxysilane and aminopropyltriethoxysilane.

In various embodiments, the adhesion promoter does not contain methoxy groups. It may be preferred that all alkoxy groups in the adhesion promoter are ethoxy groups.

In preferred embodiments, the curable compositions comprise (B) at least one adhesion promoter in an amount of about 0.01 to 5% by weight, preferably about 0.1 to 2% by weight, more preferably about 0.5 to 2% by weight based in each case on the total weight of the composition. If a mixture of the adhesion promoters is used, the amounts refer to the total amount of the adhesion promoters in the composition.

The curable compositions according to the invention further comprise (C) at least one curing catalyst.

In preferred embodiments, the curing catalyst is selected from tin catalysts, titanium catalysts, aluminum catalyst, or zirconium catalysts, more preferably tin catalysts or titanium catalysts, or mixtures thereof.

In various embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(ll) carboxylates, and mixtures thereof.

Particularly preferably, the tin compound is a dialkyltin(IV) dicarboxylate, particularly di-n-butyltin dilaurate or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti (OR^{z})₄,

wherein R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

Al(OR^{z})₃,

wherein R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups -OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates, halogenated zirconium catalysts, or zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

In preferred embodiments, the curable compositions comprise (C) at least one curing catalyst in an amount of from about 0.05 to 2% by weight, preferably 0.1 to 1.5% by weight, based in each case on the total weight of the composition. If a mixture of different catalysts is used, the amounts refer to the total amount of the curing catalysts in the composition.

The curable compositions of the invention crosslink in the presence of moisture and in so doing cure with the formation of Si-O-Si bonds.

The curable compositions can comprise at least one further component, which can be selected, for example, from plasticizers, extenders, stabilizers, antioxidants, fillers, reactive diluents, drying agents, UV stabilizers, rheological aids, and/or solvents. Of particular importance are typically plasticizers, fillers, and stabilizers, comprising antioxidants and UV stabilizers.

It is conceivable that the viscosity of the curable composition is too high for certain applications. It can then be reduced in a simple and expedient way usually by using a reactive diluent, without any signs of demixing (e.g., plasticizer migration) occurring in the cured mass.

Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition described herein can furthermore contain hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C₄₋₁₆ alcohols or mixtures of two or more different ethers of such alcohols, for example, dioctyl ether (obtainable as Cetiol OE, Cognis Deutschland GmbH, Düsseldorf).

Endcapped polyethylene glycols are also suitable as plasticizers, for example, polyethylene or polypropylene glycol di-C₁₋₄-alkyl ethers, particularly the dimethyl ordiethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible.

In various embodiments, the plasticizer may be a polydimethylsiloxane different from the component (A), particularly a PDMS that does not have the silyl group of the general formula (1).

In various embodiments, the curable composition comprises at least one plasticizer, for example a polydimethylsiloxane.

The curable compositions may contain at least one plasticizer preferably in an amount of about 1 to 50% by weight, preferably in an amount of about 10 to 40% by weight, particularly preferably in an amount of about 20 to 30% by weight, based in each case on the total weight of the composition. If a mixture of plasticizers is used, the amounts refer to the total amount of plasticizers in the composition.

The curable composition can further contain at least one stabilizer, selected from antioxidants, UV stabilizers, and drying agents.

All conventional antioxidants may be used as antioxidants. They are preferably present up to about 7% by weight, particularly up to about 5% by weight.

The composition herein can contain UV stabilizers, which are preferably used up to about 2% by weight, preferably up to about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the composition.

Isocyanates, for example, are suitable as drying agents.

Advantageously, however, silanes are used as drying agents. For example, vinylsilanes such as 3-vinylpropyltriethoxysilane, oxime silanes such as methyl-O,O',O"-butan-2-one-trioximosilane or O,O',O",O"'-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecular weight (Mₙ) of less than about 5000 g/mol and have end groups whose reactivity to penetrated moisture is at least as high as, preferably higher than, the reactivity of the reactive groups of the polymer used according to the invention.

Lastly, alkyl orthoformates or alkyl orthoacetates can also be used as drying agents, for example, methyl or ethyl orthoformate or methyl or ethyl orthoacetate.

The compositions generally contain about 0 to 6% by weight of drying agent.

The composition described herein can additionally contain fillers. Suitable here are, for example, chalk, lime powder, precipitated and/or pyrogenic (fumed) silica, zeolites, bentonites, magnesium carbonate, diatomaceous earth, alumina, clay, tallow, titanium oxide, iron oxide, zinc oxide, sand, quartz, flint, mica, glass powder, and other ground mineral substances. Organic fillers can also be used, such as, for example, carbon black, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

The pyrogenic (fumed) and/or precipitated silica preferably have a BET surface area of 10 to 250 m²/g. When they are used, they do not cause any additional increase in the viscosity of the composition of the invention, but contribute to strengthening the cured composition.

It is likewise conceivable to use pyrogenic and/or precipitated silica with a BET surface area, advantageously with 100 to 250 m²/g, particularly 110 to 170 m²/g, as a filler. Because of the higher BET surface area, the same effect, e.g., strengthening of the cured preparation, can be achieved at a smaller weight proportion of silicic acid. Further substances can thus be used to improve the composition described herein in terms of other requirements.

Suitable further as fillers are hollow spheres having a mineral shell or a plastic shell. These can be, for example, hollow glass spheres which are obtainable commercially under the trade names Glass Bubbles^{®}. Plastic-based hollow spheres, e.g., Expancel^{®} or Dualite^{®}, are described, for example, in EP 0 520 426 B1. They are made up of inorganic or organic substances and each have a diameter of 1 mm or less, preferably 500 µm or less.

Fillers that impart thixotropy to the preparations are preferred for many applications. Such fillers are also described as rheological adjuvants, e.g., hydrogenated castor oil, fatty acid amides, or swellable plastics such as PVC. In order to be readily squeezable out of a suitable dispensing device (e.g., a tube), such preparations possess a viscosity from 3000 to 15,000, preferably 40,000 to 80,000 mPas, or even 50,000 to 60,000 mPas.

Preferably, the fillers can be used in an amount of about 1 to 80% by weight, particularly preferably about 2 to 60% by weight. Of course, mixtures of a number of fillers can also be used. In this case, the quantitative data naturally refer to the total amount of fillers in the composition.

In preferred embodiments, the curable composition according to the invention comprises the following components in the stated proportions by weight:
(A) at least one polyorganosiloxane as defined above in an amount of 10 to 95% by weight, preferably in an amount of 30 to 85% by weight;
(B) at least one adhesion promoter in an amount of 0.01 to 5% by weight, preferably 0.1 to 2% by weight, more preferably 0.5 to 2% by weight;
(C) at least one curing catalyst in an amount of 0.05 to 2% by weight, preferably 0.1 to 1.5% by weight;
and, optionally, at least one or more auxiliary substance(s), wherein the proportions by weight add up to 100 wt.% and the proportions by weight are based on the total weight of the curable composition.

With regard to the preferred representatives of the individual components and the preferably used quantities thereof, the statements made above in the description of the respective components apply.

The preparation of the curable composition according to the invention can take place by simple mixing of (A) at least one polyorganosiloxane as defined above, (B) at least one adhesion promoter, (C) at least one curing catalyst, and optionally the other ingredients described herein. This can take place in suitable dispersing units, e.g., a high-speed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

The invention also provides an adhesive, sealant, or coating material comprising the curable composition according to the invention.

The invention further provides the use of the curable composition according to the invention as an adhesive, sealant, or coating material. A further field of application for the compositions is the use as a plugging compound, hole filler, or crack filler. The use as an adhesive and/or sealant is preferred. The compositions are suitable, inter alia, for bonding various substrates such as PVC (polyvinyl chloride), metals, glass, ceramic, tile, wood, wood-based materials, paper, paper-based materials, rubber, and textiles, for gluing floors, and for sealing building elements, windows, wall and floor coverings, and joints in general. In this case, the materials can be bonded to themselves or as desired to one another.

The following examples are used to explain the invention; however, the invention is not limited thereto.

### Examples

### Example 1: Preparation of thionylvinyldiethoxysilane

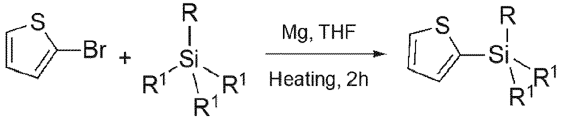

A three-neck round-bottom flask equipped with cooling condenser, dropping funnel, magnetic stir bar and a stopper is charged with magnesium chips (150 mmol, 1.5 eq, 3.6465 g) and flame-dried under reduced pressure. A crystal of iodine is added and sublimed by heating, etching the surface of the magnesium. Tetrahydrofuran (150 ml), followed by a vinyltriethoxysilane (R is vinyl and R¹s are ethoxy), is added to the flask (150 mmol, 1.5 eq). The stopper is swapped for a thermometer. To the dropping funnel 2-bromothiophene (100 mmol, 1eq) is added. While stirring, 10 vol% 2-bromothiophene is added to the flask in one portion. An increase in temperature is observed. Dropping is continued while maintaining a temperature between 40 °C and 50 °C. After the addition heating to 60 °C is turned on for 2 h. The tetrahydrofuran is distilled off, leaving a wet grey solid. Hexane (150 ml) is added to the flask and the solid is suspended, turning the color from grey to white. The solids are filtered, and hexane is distilled off yielding a crude product. Clean product is obtained by the means of vacuum distillation at 1.0×10⁻³ mbar.

### Example 2: Preparation of polyorganosiloxane containing thionyldiethoxysilyl groups

1 eq mol α,ω-dihydrogen-terminated polydimethylsiloxane (Mw: 86,500) (153.8 g), 4 eq mol thionylvinyldiethoxysilane (1.62 g) prepared according to Example 1 and 0.015 wt% of Karstedt's catalyst 540 were stirred at 80°C for 5 hours.

### Example 3: Preparation of polyorganosiloxane containing triethoxysilyl groups (comparative example)

A mixture of 100 g α,ω-dihydroxy-terminated polydimethylsiloxane (Mw: 107,000), 6.3 g vinyltriethoxysilane (VTEO) and 0.33 g K Kat 670 (zinc complex catalyst from King) was stirred for 1 min with 2200 rpm at RT.

### Example 4

The Formulations A and B were prepared by mixing the raw materials listed in Table 1 and their skin over time was measured.

**Table 1**

| **Components (amount in g)** | **Formulation A** | **Formulation B** |
|---|---|---|
| Polymer obtained in Example 2 | 34.5 | |
| Polymer obtained in Example 3 | | 34.5 |
| N-(2-aminoethyl)-3-aminopropyltrimethoxysilane | 0.35 | 0.35 |
| dioctyltin dilaurate | 0.11 | 0.11 |
| | | |
| **SOT (min)** | 35 | 70 |

Determination of Skin-over time (SOT): Skin-over time (SOT) is defined as the time required for the material to form a non-tacky surface film. The determination of the skin over time was carried out according to DIN 50014 under standard climate conditions (23 +/- 2°C, relative humidity 50 +/- 5%). The temperature of the sealant must be 23 +/- 2°C, with the sealant stored for at least 24 h beforehand in the laboratory. The formulation was applied to a sheet of paper and spread out with a putty knife to form a skin (thickness about 2 mm, width about 7 cm). The stopwatch was started immediately. At intervals, the surface was touched lightly with the fingertip and the finger was pulled away, with sufficient pressure on the surface that an impression remains on the surface when the skin formation time was reached. The skin-over time was reached when sealing compound no longer adheres to the fingertip. The skin-over time (SOT) is expressed in minutes.

### Example 5

The Formulations C to E were prepared by mixing the raw materials listed in Table 2 and their curing performance, mechanical properties, and adhesion performance were measured.

**Table 2**

| **Components (amount in wt%)** | **Formulation C** | **Formulation D** | **Formulation E** |
|---|---|---|---|
| Polymer obtained in Example 2 | 67.0 | | |
| Polymer obtained in Example 3 | | 67.0 | 67.0 |
| Plasticizer (Polydimethylsiloxane with a viscosity of 1,000 cST) | 21.8 | 21.8 | 21.8 |
| Hydrophobic fumed silica (Aerosil R 104) | 10.0 | 10.0 | 10.0 |
| aminopropyltriethoxysilane | 1.0 | 1.0 | |
| vinyltriethoxysilane | | | 1.0 |
| dioctyltin dilaurate | 0.2 | 0.2 | 0.2 |
| | | | |
| Shore A 1day | 4 | nm | nm |
| Shore A 7days | 24 | nm | nm |
| Cure through mm/24h | 4.8 | nm | nm |
| SOT [Min] | 50 | 120 | 120 |
| Elongation at break [%] | 360 | nm | nm |
| Modulus at 100% elongation [N/mm²] | 0.43 | nm | nm |
| Tensile strength at break [N/mm²] | 1.37 | nm | nm |
| Peel test in 7 days PVC | CF | nm | nm |
| Peel test in 7 days Alu anodized | CF | nm | nm |
| Peel test in 7 days copper | CF | nm | nm |
| Peel test in 7 days stainless steel | CF | nm | nm |

| | | | |
|---|---|---|---|
| "nm" means not measurable. The performances test for formulations D and E (comparative examples) could not be carried out as no curing was observed. "CF" means cohesion failure. | | | |

Determination of Skin-over time (SOT): Skin-over time (SOT) was measured as described above.

Measurement of Shore A hardness: Shore A hardness was measured according to ISO 868.

Determination of the depth of cure (DOC): A strip of the material with a height of 10 mm (+/- 1 mm) and width of 20 mm (+/- 2 mm) was applied over a plastic foil (PP) using a Teflon spatula. After storing the sample for 24 hours at normal conditions (23 +/- 2 °C, relative humidity 50 +/- 5 %), a section of the strip was cut off and the thickness of the cured layer was measured with a caliper. The depth of cure after 24 hours is expressed in millimeters.

Assessment of the mechanical properties (tensile test): The Tensile test determines the breaking force, elongation at break and yield stress value (e-module), according to DIN 53504. The tests took place using S3 specimen at normal conditions (23 +/- 2 °C, relative humidity 50 +/- 5 %). The measurement was carried out after 7 days of curing. Procedure: the prepolymer mixture (formulation) was spread on an even surface forming a film with a thickness of 2 mm. The film was allowed to cure under normal conditions (see above) for seven days, and then the dumbbell specimen was punched out. Three specimens were used for each determination. The test was carried out under normal conditions. The test specimens have to be at the same temperature at which the measurement will take place. Before the measurement, the thickness of the test specimens is determined at least at three different positions, at the middle and at the extremes, with a caliper. The mean value is introduced in the measuring software. The test specimens are clamped into the tensile tester so that the longitudinal axis coincides with the mechanical axis of the tensile tester and comprises the largest possible surface of the rod heads, without clamping the middle bar. Then the dumbbell is stretched to <0.1 MPa with a rate of 50 mm / min. Then, the force-elongation curve is recorded with a line speed of 50 mm / min. Evaluation: The following values are determined: breaking force in [N/mm²] elongation at break in [%] and modulus at 100% elongation in [N/mm²].

Peel test: If possible and needed, substrate (test panel) was cleaned prior to application using a suitable solvent. A strip of the material with a height of 10 mm (+/- 1 mm) and width of 20 mm (+/- 2 mm) was applied over the substrate using a Teflon spatula / cartridge and cartridge gun. The sample was stored for 7 days at normal conditions (23 +/- 2 °C, relative humidity 50 +/- 5 %). The cured material was cut back for at least 15mm with a shape blade and the bead pulled by hand.

## Claims

1. A polyorganosiloxane containing at least one silyl group of the general formula (1)
-(CH₂)₂-Si(R¹)ₙ(R)ₘ (1),
wherein
each R¹ is independently selected from a hydrolysable group, preferably selected from the group consisting of alkoxy, carboxy, oxime, amino, amido, lactato, alkenoxy, and acetoxy groups, more preferably alkoxy groups,
each R is independently of a group of the general formula (2) having at least one heteroatom X bridged to a silicon atom of the general formula (1) via a sp²-hybridized quaternary carbon atom: 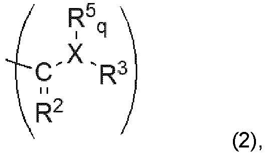 wherein
X is a divalent or polyvalent heteroatom;
each R⁵ is independently selected from oxygen, hydrogen, or a linear or branched, substituted or unsubstituted hydrocarbon group having 1 to 20 carbon atoms which may contain at least one heteroatom;
R² and R³ are, independently from one another, selected from hydrogen or a linear or branched, substituted or unsubstituted hydrocarbon group having 1 to 20 carbon atoms which may contain at least one heteroatom, or R² and R³ may form a cyclic structure; and
q is an integer selected from 0 to 3; and
n is 1 or 2 and m is 1 or 2, wherein the sum of n and m is 3.

2. The polyorganosiloxane according to claim 1, wherein each R in the general formula (1) independently has the structure of the general formula (2-A): 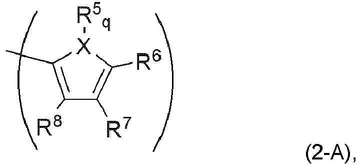 wherein
R⁵, X, and q are as defined for the general formula (2) above; and
R⁶, R⁷and R⁸ are, independently from one another, selected from hydrogen, a hydroxy group, or a linear or branched, substituted or unsubstituted hydrocarbon group having 1 to 20 carbon atoms which may contain at least one heteroatom.

3. The polyorganosiloxane according to claim 1 or 2, wherein the polyorganosiloxane contains at least two silyl groups of the general formula (1).

4. The polyorganosiloxane according to any one of claims 1 to 3, wherein the polyorganosiloxane contains at least two terminal silyl groups of the general formula (1).

5. The polyorganosiloxane according to any one of claims 1 to 4, wherein each R¹ is independently selected from the group consisting of alkoxy, carboxy, oxime, amino, amido, lactato, alkenoxy, and acetoxy groups, preferably alkoxy groups, more preferably C₁-C₈ alkoxy group, in particular a methoxy or ethoxy group.

6. The polyorganosiloxane according to any one of claims 1 to 5, wherein X is selected from O, S, N or P, preferably O or S, more preferably is S.

7. The polyorganosiloxane according to any one of claims 1 to 6, wherein n is 2 and m is 1.

8. A method for preparing a polyorganosiloxane according to any one of claims 1 to 7, comprising the step of reacting at least one polyorganosiloxane having at least one -SiH group with at least one silane compound of the general formula (3) having at least one heteroatom X bridged to a silicon atom via a sp²-hybridized quaternary carbon atom in the presence of a hydrosilylation catalyst, 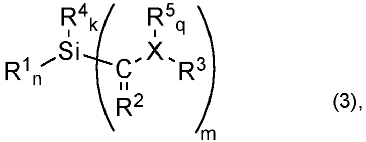 wherein
R¹ to R³, R⁵, X, n, m, and q are as defined for the general formulas (1) and (2) above;
R⁴ is vinyl group; and
k is 1.

9. The method according to claim 8, wherein said at least one silane compound has the structure of the general formula (3-A): 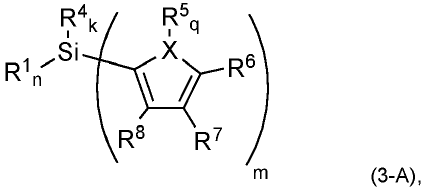 wherein R¹, R⁴, R⁵ to R⁸, X, n, m, q, and k are as defined for the general formula (1), (2-A), or (3) above.

10. A curable composition comprising
(A) at least one polyorganosiloxane according to any one of claims 1 to 7 or at least one polyorganosiloxane obtainable according to claim 8 or 9;
(B) at least one adhesion promoter; and
(C) at least one curing catalyst.

11. The curable composition according to claim 10, wherein the adhesion promoter comprises at least one compound selected from (i) aminosilanes, optionally oligomerized together with alkyl-, alkenyl- or aryl-alkoxysilanes; or (ii) oligomers obtained from the condensation of aminosilanes, optionally oligomerized together with alkyl-, alkenyl- or aryl-alkoxysilanes, or mixtures thereof.

12. The curable composition according to claim 10 or 11, wherein the composition comprises
(A) at least one polyorganosiloxane as defined above in an amount of 10 to 95% by weight, more preferably in an amount of 30 to 85% by weight;
(B) at least one adhesion promoter in an amount of 0.01 to 5% by weight, preferably 0.1 to 2% by weight, more preferably 0.5 to 2% by weight;
(C) at least one curing catalyst in an amount of 0.05 to 2% by weight, preferably 0.1 to 1.5% by weight;
and, optionally, at least one or more auxiliary substance(s), wherein the proportions by weight add up to 100 wt.% and the proportions by weight are based on the total weight of the curable composition.

13. The curable composition according to any one of claims 10 to 12, wherein the curing catalyst is a tin compound, preferably an organotin compound, more preferably selected from 1,3-dicarbonyl compounds of bivalent or tetravalent tin, dialyltin(IV) dicarboxylates, dialkyltin(IV) dialkoxylates, dialkyltin(IV) oxides, tin(II) carboxylates, and mixtures thereof.

14. An adhesive, sealant, or coating material comprising the curable composition according to any one of claims 10 to 13.

15. Use of the curable composition according to any one of claims 10 to 13 as an adhesive, sealant, and/or coating material.

## Patentansprüche

1. Polyorganosiloxan, das mindestens eine Silylgruppe der allgemeinen Formel (1) enthält
-(CH₂)₂-Si(R¹)ₙ(R)ₘ (1),
wobei
jedes R¹ unabhängig aus einer hydrolysierbaren Gruppe ausgewählt ist, vorzugsweise aus der Gruppe ausgewählt, bestehend aus Alkoxy-, Carboxy-, Oxim-, Amino-, Amido-, Lactato-, Alkenoxy- und Acetoxygruppen, stärker bevorzugt Alkoxygruppen,
jedes R unabhängig von einer Gruppe der allgemeinen Formel (2) ist, die mindestens ein Heteroatom X aufweist, das mit einem Siliziumatom der allgemeinen Formel (1) über ein sp²-hybridisiertes quartäres Kohlenstoffatom verbrückt ist: 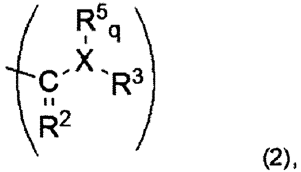 wobei
X ein divalentes oder polyvalentes Heteroatom ist;
jedes R⁵ unabhängig aus Sauerstoff, Wasserstoff oder einer linearen oder verzweigten, substituierten oder unsubstituierten Kohlenwasserstoffgruppe ausgewählt ist, die 1 bis 20 Kohlenstoffatome aufweist, die mindestens ein Heteroatom enthalten können;
R² und R³ unabhängig voneinander aus Wasserstoff oder einer linearen oder verzweigten, substituierten oder unsubstituierten Kohlenwasserstoffgruppe ausgewählt sind, die 1 bis 20 Kohlenstoffatome aufweist, die mindestens ein Heteroatom enthalten können, oder R² und R³ eine cyclische Struktur ausbilden können; und
q eine ganze Zahl ist, die von 0 bis 3 ausgewählt ist; und
n 1 oder 2 ist und m 1 oder 2 ist, wobei die Summe von n und m 3 ist.

2. Polyorganosiloxan nach Anspruch 1, wobei jedes R in der allgemeinen Formel (1) unabhängig die Struktur der allgemeinen Formel (2-A) aufweist: 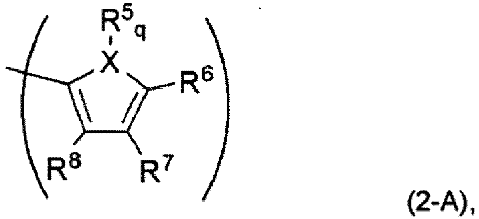 wobei
R⁵, X und q wie für die allgemeine Formel (2) obenstehend definiert sind; und
R⁶, R⁷ und R⁸ unabhängig voneinander aus Wasserstoff, einer Hydroxygruppe oder einer linearen oder verzweigten, substituierten oder unsubstituierten Kohlenwasserstoffgruppe ausgewählt sind, die 1 bis 20 Kohlenstoffatome aufweist, die mindestens ein Heteroatom enthalten können.

3. Polyorganosiloxan nach Anspruch 1 oder 2, wobei das Polyorganosiloxan mindestens zwei Silylgruppen der allgemeinen Formel (1) enthält.

4. Polyorganosiloxan nach einem der Ansprüche 1 bis 3, wobei das Polyorganosiloxan mindestens zwei endständige Silylgruppen der allgemeinen Formel (1) enthält.

5. Polyorganosiloxan nach einem der Ansprüche 1 bis 4, wobei jedes R¹ unabhängig aus der Gruppe ausgewählt ist, bestehend aus Alkoxy-, Carboxy-, Oxim-, Amino-, Amido-, Lactato-, Alkenoxy- und Acetoxygruppen, vorzugsweise Alkoxygruppen, stärker bevorzugt C₁-C₈-Alkoxygruppe, insbesondere einer Methoxy- oder Ethoxygruppe.

6. Polyorganosiloxan nach einem der Ansprüche 1 bis 5, wobei X aus O, S, N oder P ausgewählt ist, vorzugsweise O oder S ist, stärker bevorzugt S ist.

7. Polyorganosiloxan nach einem der Ansprüche 1 bis 6, wobei n 2 ist und m 1 ist.

8. Verfahren zum Herstellen eines Polyorganosiloxans nach einem der Ansprüche 1 bis 7, umfassend den Schritt eines Umsetzens von mindestens einem Polyorganosiloxan, das mindestens eine -SiH-Gruppe aufweist, mit mindestens einer Silanverbindung der allgemeinen Formel (3), die mindestens ein Heteroatom X aufweist, das mit einem Siliziumatom über ein sp²-hybridisiertes quartäres Kohlenstoffatom verbrückt ist, in der Gegenwart eines Hydrosilylierungskatalysators, 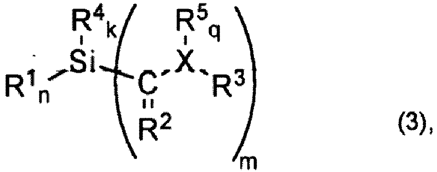 wobei
R¹ bis R³, R⁵, X, n, m und q wie für die allgemeinen Formeln (1) und (2) obenstehend definiert sind;
R⁴ eine Vinylgruppe ist; und
k 1 ist.

9. Verfahren nach Anspruch 8, wobei die mindestens eine Silanverbindung die Struktur der allgemeinen Formel (3-A) aufweist: 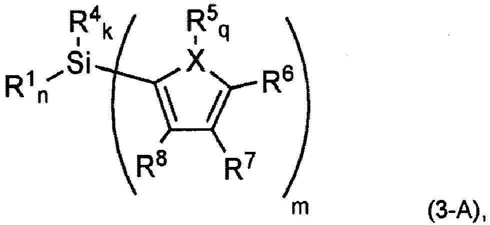 wobei R¹, R⁴, R⁵ bis R⁸, X, n, m, q und k wie für die allgemeine Formel (1), (2-A) oder (3) obenstehend definiert sind.

10. Härtbare Zusammensetzung, umfassend
(A) mindestens ein Polyorganosiloxan nach einem der Ansprüche 1 bis 7 oder mindestens ein Polyorganosiloxan erhältlich nach Anspruch 8 oder 9;
(B) mindestens einen Haftvermittler; und
(C) mindestens einen Härtungskatalysator.

11. Härtbare Zusammensetzung nach Anspruch 10, wobei der Haftvermittler mindestens eine Verbindung umfasst, ausgewählt aus (i) Aminosilanen, optional zusammen mit Alkyl-, Alkenyl- oder Arylalkoxysilanen oligomerisiert; oder (ii) Oligomeren, die aus der Kondensation von Aminosilanen erhalten werden, optional zusammen mit Alkyl-, Alkenyl- oder Arylalkoxysilanen oligomerisiert, oder Gemische davon.

12. Härtbare Zusammensetzung nach Anspruch 10 oder 11, wobei die Zusammensetzung umfasst
(A) mindestens ein Polyorganosiloxan wie obenstehend definiert in einer Menge von 10 bis 95 Gew.-%, stärker bevorzugt in einer Menge von 30 bis 85 Gew.-%;
(B) mindestens einen Haftvermittler in einer Menge von 0,01 bis 5 Gew.-%, vorzugsweise 0,1 bis 2 Gew.-%, stärker bevorzugt 0,5 bis 2 Gew.-%;
(C) mindestens einen Härtungskatalysator in einer Menge von 0,05 bis 2 Gew.-%, vorzugsweise 0,1 bis 1,5 Gew.-%;
und optional mindestens eine oder mehrere Hilfsstoffsubstanz(en), wobei sich die Gewichtsanteile auf 100 Gew.-% summieren und die Gewichtsanteile auf dem Gesamtgewicht der härtbaren Zusammensetzung basieren.

13. Härtbare Zusammensetzung nach einem der Ansprüche 10 bis 12, wobei der Härtungskatalysator eine Zinnverbindung ist, vorzugsweise eine Organozinnverbindung, stärker bevorzugt aus 1,3-Dicarbonylverbindungen von bivalentem oder tetravelentem Zinn, Dialkylzinn(IV)dicarboxylaten, Dialkylzinn(IV)dialkoxylaten, Dialkylzinn(IV)oxiden, Zinn(II)carboxylaten und Gemischen davon ausgewählt ist.

14. Klebstoff, Dichtungsmaterial oder Beschichtungsmaterial, umfassend die härtbare Zusammensetzung nach einem der Ansprüche 10 bis 13.

15. Verwendung der härtbaren Zusammensetzung nach einem der Ansprüche 10 bis 13 als ein Klebstoff, Dichtungsmaterial und/oder Beschichtungsmaterial.

## Revendications

1. Polyorganosiloxane contenant au moins un groupe silyle de la formule générale (1)
-(CH₂)₂-Si(R¹)ₙ(R)ₘ (1),
dans lequel
chaque R¹ est indépendamment choisi parmi un groupe hydrolysable, de préférence choisi dans le groupe constitué de groupes alcoxy, carboxy, oxime, amino, amido, lactato, alcénoxy, et acétoxy, plus préférablement des groupes alcoxy,
chaque R est indépendamment d'un groupe de la formule générale (2) ayant au moins un hétéroatome X ponté à un atome de silicium de la formule générale (1) par l'intermédiaire d'un atome de carbone quaternaire hybridé sp² : 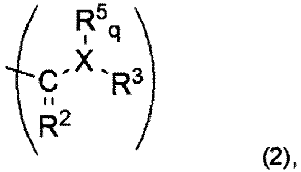
dans lequel
X est un hétéroatome divalent ou polyvalent ;
chaque R⁵ est choisi indépendamment parmi oxygène, hydrogène, ou un groupe hydrocarboné linéaire ou ramifié, substitué ou non substitué, ayant 1 à 20 atomes de carbone qui peut contenir au moins un hétéroatome ;
R² et R³ sont, indépendamment l'un de l'autre, choisis parmi hydrogène ou un groupe hydrocarboné linéaire ou ramifié, substitué ou non substitué, ayant 1 à 20 atomes de carbone qui peut contenir au moins un hétéroatome, ou R² et R³ peuvent former une structure cyclique ; et
q est un nombre entier choisi entre 0 et 3 ; et
n vaut 1 ou 2 et m vaut 1 ou 2, dans lequel la somme de n et m vaut 3.

2. Polyorganosiloxane selon la revendication 1, dans lequel chaque R de la formule générale (1) a indépendamment la structure de la formule générale (2-A) : 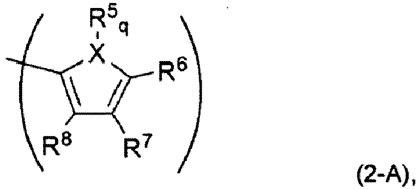 dans lequel
R⁵, X, et q sont tels que définis pour la formule générale (2) ci-dessus ; et
R⁶, R⁷ et R⁸ sont, indépendamment les uns des autres, choisis parmi hydrogène, un groupe hydroxy, ou un groupe hydrocarboné linéaire ou ramifié, substitué ou non substitué, ayant 1 à 20 atomes de carbone qui peut contenir au moins un hétéroatome.

3. Polyorganosiloxane selon la revendication 1 ou 2, dans lequel le polyorganosiloxane contient au moins deux groupes silyle de la formule générale (1).

4. Polyorganosiloxane selon l'une quelconque des revendications 1 à 3, dans lequel le polyorganosiloxane contient au moins deux groupes silyle terminaux de la formule générale (1).

5. Polyorganosiloxane selon l'une quelconque des revendications 1 à 4, dans lequel chaque R¹ est choisi indépendamment dans le groupe constitué de groupes alcoxy, carboxy, oxime, amino, amido, lactato, alcénoxy, et acétoxy, de préférence des groupes alcoxy, plus préférablement un groupe alcoxy en C₁-C₈, en particulier un groupe méthoxy ou éthoxy.

6. Polyorganosiloxane selon l'une quelconque des revendications 1 à 5, dans lequel X est choisi parmi O, S, N ou P, de préférence O ou S, plus préférablement est S.

7. Polyorganosiloxane selon l'une quelconque des revendications 1 à 6, dans lequel n vaut 2 et m vaut 1.

8. Procédé de préparation d'un polyorganosiloxane selon l'une quelconque des revendications 1 à 7, comprenant l'étape consistant à faire réagir au moins un polyorganosiloxane ayant au moins un groupe -SiH avec au moins un composé silane de la formule générale (3) ayant au moins un hétéroatome X ponté à un atome de silicium par l'intermédiaire d'un atome de carbone quaternaire hybridé sp², en présence d'un catalyseur d'hydrosilylation, 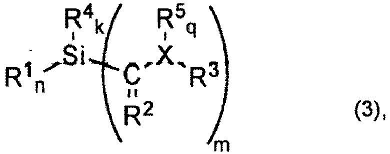 dans lequel
R¹ à R³, R⁵, X, n, m, et q sont tels que définis pour les formules générales (1) et (2) ci-dessus ;
R⁴ est un groupe vinyle ; et
k vaut 1.

9. Procédé selon la revendication 8, dans lequel ledit au moins un composé silane a la structure de la formule générale (3-A) : 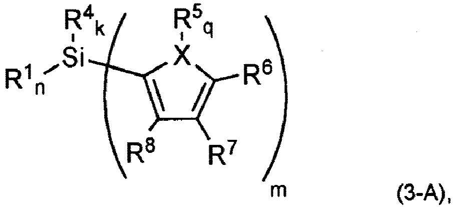 dans lequel R¹, R⁴, R⁵ à R⁸, X, n, m, q, et k sont tels que définis pour la formule générale (1), (2-A), ou (3) ci-dessus.

10. Composition durcissable comprenant
(A) au moins un polyorganosiloxane selon l'une quelconque des revendications 1 à 7 ou au moins un polyorganosiloxane pouvant être obtenu selon la revendication 8 ou 9 ;
(B) au moins un promoteur d'adhérence ; et
(C) au moins un catalyseur de durcissement.

11. Composition durcissable selon la revendication 10, dans laquelle le promoteur d'adhérence comprend au moins un composé choisi parmi (i) des aminosilanes, facultativement oligomérisés avec des alkyl-, alcényl- ou aryl-alcoxysilanes ; ou (ii) des oligomères obtenus par condensation d'aminosilanes, facultativement oligomérisés avec des alkyl-, alcényl- ou aryl-alcoxysilanes, ou mélanges de ceux-ci.

12. Composition durcissable selon la revendication 10 ou 11, dans laquelle la composition comprend
(A) au moins un polyorganosiloxane tel que défini ci-dessus en une quantité de 10 à 95 % en poids, plus préférablement en une quantité de 30 à 85 % en poids ;
(B) au moins un promoteur d'adhérence en une quantité de 0,01 à 5 % en poids, de préférence 0,1 à 2 % en poids, plus préférablement 0,5 à 2 % en poids ;
(C) au moins un catalyseur de durcissement en une quantité de 0,05 à 2 % en poids, de préférence 0,1 à 1,5 % en poids ;
et, facultativement, au moins une ou plusieurs substances auxiliaires, dans laquelle les proportions en poids s'additionnent jusqu'à 100 % en poids et les proportions en poids sont basées sur le poids total de la composition durcissable.

13. Composition durcissable selon l'une quelconque des revendications 10 à 12, dans laquelle le catalyseur de durcissement est un composé d'étain, de préférence un composé d'étain organique, plus préférablement choisi parmi des composés 1,3-dicarbonyle d'étain bivalent ou tétravalent, des dicarboxylates de dialkylétain (IV), des dialcoxylates de dialkylétain (IV), des oxydes de dialkylétain (IV), des carboxylates d'étain (II), et mélanges de ceux-ci.

14. Adhésif, produit d'étanchéité, ou matériau de revêtement comprenant la composition durcissable selon l'une quelconque des revendications 10 à 13.

15. Utilisation de la composition durcissable selon l'une quelconque des revendications 10 à 13 en tant qu'adhésif, produit d'étanchéité, et/ou matériau de revêtement.
